# EUROPEAN PATENT SPECIFICATION

(11) **EP 1 819 792 B1**
(45) Date of publication and mention of the grant of the patent: **15.04.2009**
(21) Application number: 05801338.4
(22) Date of filing: 13.10.2005
(51) Int. Cl.: C09D 183/14, C08G 77/56, C08G 77/58, C08L 83/04, C08L 63/00

(54) **POLYMERIC COMPOSITIONS WITH MODIFIED SILOXANE NETWORKS, CORRESPONDING PRODUCTION AND USES THEREOF**
POLYMERE ZUSAMMENSETZUNGEN MIT MODIFIZIERTEN SILOXANNETZWERKEN, ENTSPRECHENDE HERSTELLUNG UND ANWENDUNGEN DAVON
COMPOSITIONS POLYMÈRES CONTENANT DES RÉSAUX SILOXANE MODIFIÉS, PRODÉDÉ POUR LEUR PREPARATION ET LEUR UTILISATION

(30) Priority: 13.10.2004 EP 04105026
(43) Date of publication of application: 22.08.2007
(73) Proprietor: Prezzi, Luca, 1090 La Croix sur Lutry (CH)
(72) Inventor: MASCIA, Liberato, Loughborough LE11 3QL (GB); PREZZI, Luca, La Croic sur Lutry (CH)
(74) Representative: Raimondi, Adriana
(86) International application number: PCT/EP2005/055218
(87) International publication number: WO 2006/040336

(56) References cited:
- US-A- 5 120 811
- US-A- 5 618 860

## Description

### Field of the invention

The present invention relates to polymeric compositions with modified siloxane networks, corresponding production and uses thereof. These compositions are particularly useful for protective coating applications and for adhesives and composites.

More particularly the invention refers to compositions of thermosetting resins, combined to siloxane components by the sol-gel process, to form a network which is modified with the introduction of metals such as Molybdenum, Boron or Tungsten. The materials obtained from these compositions consist of interpenetrated organic-inorganic networks (IPNs) and, depending on the metal employed for the modification of the inorganic network, exhibit superior chemical resistance, thermal resistance, hardness, long lasting corrosion protection and low thermal expansion. The present invention is of special interest for coating applications requiring fast curing, self priming, tolerance to surface contaminations and damp environment.

### Background

Thermosetting resins are well known [A.W. Birley, and M. Scott, Plastic Materials, Properties and Applications, Leonard Hill, Glasgow (1982)]. Among them, epoxy and vinyl-ester resins are suitable for protective coating applications thanks to their good chemical resistance and adhesion.

Specific needs come from the marine and industrial fields where surfaces are particularly exposed to aggressive environments such as atmospheric and/or other chemical agents, sea water and mechanical abuses. In these conditions the surfaces (especially metallic surfaces) are exposed to oxidising agents and need an adequate protection. Thermosetting resins are particularly useful as coatings in this fields, however the corrosion protection is generally achieved by engineering the coating as a multi-layer system. The first layer (the "primer"), the one in contact with the metal surface, is added with inorganic corrosion inhibitors to protect the substrate. However, owing to the presence of high loads of inorganics, such primers provide a poor adhesion with the over-coating layers called "builder", (which constitute the mechanical barrier offered by the coating), decreasing therefore the service life of the entire coating system. Some protective coatings have been made by combining the corrosion inhibitor together with the main coat (builder). However this results in a loss of the corrosion protection properties in that the corrosion inhibitor gets rapidly released in the environment without use. Therefore mechanical and corrosion resistance are properties required for high performance coatings.

Other needs addressed by the marine field are for coatings characterised by high chemical resistance and capable of being easily cured in cold and damp environments. Chemical resistance is particularly important in tank-coating applications. The development of low temperature fast curing and chemically resistant materials without the need of a catalyst are therefore still in demand.

Promising coatings are those obtained by sol-gel techniques from liquid silane precursors in that they show high cross-linking levels and have good mechanical properties and chemical resistance. Sol-gel techniques are well known to the experts and described in The Physics and Chemistry of Sol-Gel Processing, C. J. Brinker, G.W. Scherer, Sol-Gel Science:, Academic Press, London, 1990. Suitable materials incorporating polymerisable organic components into a sol-gel system are generally known as ORMOCERs (Organically Modified Ceramics) [B.M. Novak, Advanced Materials, 5, [6], 422, (1993)] and are characterised by a network of silica (or other metal oxides) particles within a hybrid organic-inorganic network. While these materials are quite hard and provide abrasion-resistant coatings, they are rather brittle and have transparency deficiencies due to lack of interpenetration between the organic and the inorganic components. Furthermore most of these materials need to be cured at relatively high temperatures (200°C or higher) rendering them unsuitable for application on substrates having low softening points like thermoplastic materials or for applications where post-curing at high temperatures is not possible for practical reasons (i.e. on large vessels). In order to overcome the draw-backs of these materials, techniques for introducing silica by the sol-gel method in organic matrices have been developed, and are described in patent application WO0125343, which outlines some routes for the production of interpenetrating organic-inorganic networks and the advantages that this type of network involves. The thus obtained materials overcome the mentioned draw-backs, however, at low inorganic contents do not have good performances. When excellent performances are required, high inorganic contents are necessarily needed but creating other problems such as the need for evaporating high levels of volatile matter formed during the condensation of the metal alkoxydes, low viscosities associated to the high inorganic precursors content, brittleness, lack of adhesion, flexibility and transparency deficiencies.

Patent documents US 5120811, US 5618860, US 2003/153682, US 2004/143060, US 4250074, EP 0281082 all approach the problem of formation of organic-inorganic polymer composites, but do not provide a material capable of showing all the above characteristics in a satisfactory manner.

The polymer-glass hybrid coatings described in US 5120811 are obtained by means of a pre-hydrolisation of silicates in an acid environment (pH ∼ 2). In such acid environments, corrosion inhibitors, such as molybdate ions, tend to isopolymerise, strongly reducing their ability to diffuse and badly affecting their properties of corrosion inhibitors. Besides, such approach to the sol-gel polymerisation of the siloxanes generates mostly linear and long chained polysiloxanes thus reducing the possibility for interpenetration of organic-inorganic networks and, as a consequence, giving a poor control of the diffusion of any added ions, such as molybdates. Moreover, the high content of inorganics render these materials brittle and scarcely adhesive to substrates, in particular for high thicknesses.

Compositions described in US 5618860 are such not to allow to obtain interpenetrating polymer networks. This is caused by both the nature of the starting components and the procedures therein disclosed. The siloxanes employed are all organooxisylanes and this suggests that the scope of the patent is not to create a true inorganic phase and in fact the thus obtained compositions are likely to create phase separation between the organic and the inorganic components, therefore leading to a non interpenetrating polymer network, which results in a non satisfactory chemical resistance, in particular, resistance to swelling in the presence of solvents. The compositions of US 5618860 contain additional components, such as organic salts of metal ions, that do not show corrosion inhibition properties and, IPN hybrid structures being absent, do not diffuse in a controlled manner.

For the same reasons given in US 5618860, neither the siloxanes disclosed in US 2003/153682 and in US 2004/143060 adequately polymerise within the epoxy resin to give a real organic-inorganic hybrid IPN and do not provide suitable materials, in particular when resistance to solvents is required.

The above mentioned documents (US 5618860, US 2003/153682 and US 2004/143060) obtain their materials through a process in which the organic resin (that will constitute the organic phase of the IPN) and the inorganic phase precursors and their coupling agents (organo-functional silanes) are kept separated, then they are mixed together to react. This procedure does not allow a suitable compatibilisation between the organic and inorganic phases thus leading to a non interpenetrated polymer network. As a result the polymer compositions are affected by scarce transparency and unsatisfactory chemical resistance when compared to hybrid IPNs (within the meaning of the present invention).

The IPNs described in US 4250074 are not hybrid IPNs in that they are formed with procedures which do not allow the formation of covalent connections between the organic and inorganic phase precursors prior to polymerisation. Although three procedures are mentioned, all of them lead to the formation of two distinct networks with a considerable amount of phase separation which leads to scarce transparency and poor chemical resistance compared to hybrid IPNs where covalent bonding exists between organosilanes precursors and epoxy resin prior to polymerisation of the organic and inorganic phases. Moreover in US 4250074 there are not present metals in a form capable to modify any IPN, and those mentioned are only the catalysts necessary for the sol-gel reaction.

EP 0281082 discloses the production and applications of materials obtained from inorganic polycondensation products mixed with organic polymers. The production procedure disclosed consists in dissolving an organic polymer in a solvent and than adding the inorganic phase precursors and water. The curing of these materials occurs for evaporation of the solvent and for polymerisation of the inorganic precursors. The thus obtained materials are made of inorganic and organic polymers which are not directly connected by covalent bonds therefore they are characterised by a high level of phase separation. These kind of structures do not have the requirements for controlled release properties. Consequently, although EP 0281082 discloses compositions containing boric acid or other inorganic compounds, the thus obtained products are completely different from a true IPN and are not able to control ions diffusion.

In conclusion, even though the organic-inorganic polymer composites are in principle considered suitable materials for high performance coatings, at present there still does not exist a single material capable of showing at the same time at least the following characteristics in a satisfactory manner: transparency, chemical resistance, fast curing, controlled inhibitors releasing and hardness.

The present invention proposes, through the modification of the inorganic network of polysiloxanes formed in-situ with a polymeric sol-gel technique within a polymerisable thermosetting organic matrix, to obtain a real hybrid IPN and to solve all the draw-backs indicated in the above mentioned art.

According to the present invention, the term interpenetrated organic-inorganic network (IPN) defines a hybrid structure consisting in the intimate combination of two main phases (one organic and one inorganic) and a minor one; the organic phase is constituted by an organic matrix; the inorganic phase is constituted by an inorganic network; the minor interphase is constituted by the covalent interconnections between the two main phases that defines the "smooth" border between the two ones. According to the present invention the interpenetrating networks are formed simultaneously and are covalently connected for increasing the interfacial interactions between the two main phases (B.M. Novak, *Hybrid Nanocomposite Materials - Between Inorganic Glasses and Organic Polymers,*

Advanced Materials, 1993, 5, No. 6, pg 422).

### Brief description of the drawings

Fig. 1 is a graph of the extracted MoO4 versus time.
Fig. 2 is a graph of the weight increase of a series of samples in THF (tetrahydrofurane).

### Summary of the invention

The polymer compositions according to the present invention are compositions of thermosetting resins, in particular epoxy resins, combined with modified polysiloxane networks to form hybrid materials. These compositions can be used to make coatings that exhibit excellent hardness, chemical resistance, fast curing, damp tolerance and are self priming with slow release of corrosion inhibitors.

More in particular, according to a first aspect of the invention, the components of the composition are made to react thus forming a continuous interpenetrated network which comprises an organic matrix, comprising the thermosetting resin and the hardener, and an inorganic network, comprising polysiloxanes and metals.

According to a second aspect of the invention the modification of the polysiloxane network with the metals, such as boron, molybdenum and tungsten, preferably in form of oxides, is obtained through a polymeric sol-gel reaction. The inclusion in the polysiloxane network of other inorganic oxides is considered to be responsible for the superior properties shown by these materials. According to a third aspect of the invention, the mentioned metals are present in a form such to be able to react with the polysiloxanes precursors, such as in form of borates, molybdates and tungstates or preferably in the form of acids. According to a fourth aspect of the invention, the structure of the hybrids obtained in this way allows a slow release of a certain and limited degree of the metal oxide, in water, which, in case the metal is also a corrosion inhibitor as in the case of molybdenum and tungsten, can diffuse to improve corrosion protection. According to a fifth aspect of the invention, the inorganic modification of the polysiloxane network leads to large changes in respect to the unmodified system and each introduced element also furnishes peculiar properties. According to a sixth aspect of the invention, the ingredients of the compositions can be selected in such a way that for their mixing and for obtaining proper viscosities, diluents or solvents are not needed, thus reducing the amount of volatile organic compounds possibly evaporating from the coatings.

The polymer composition according to the present invention can be defined as a hybrid interpenetrated organic-inorganic network (IPN) comprising an organic matrix and an inorganic network, interpenetrated between them and connected with covalent bonds, further characterized by the presence of metals, linked to the inorganic network via an oxygen atom. The organosilane precursors, allow the formation of a hybrid IPN, constituted by organic-inorganic phases made of polysiloxanes formed in-situ with a sol-gel technique within a polymerisable thermosetting organic matrix, entangled and interconnected by covalent bonding. Hybrid IPNs according to the present invention only occur in that the reaction conditions herein below described permit to obtain covalent bonding between organosilanes precursors and epoxy resin prior to polymerisation of the organic and inorganic phases.

The compositions of thermosetting resins combined with modified polysiloxane networks, according to the principles of the present invention, are prepared by combining a first and a second separately prepared solutions, said first solution comprising the following components:
(a) a polymerisable organic compound selected among those producing thermosetting resins; component (a) represents the organic matrix of the polymeric composition of the invention;
(b) non-hydrolised polysiloxanes precursors characterised in that they have a single Si atom in the molecule, linked directly or by means of an O atom, to four C atoms, preferably the precursor has formula (R1)ₘSi(OR2)ₙ [the meaning of R1, R2, m and n will be given in the following detailed description]; component (b) is basically the inorganic network of the polymeric composition of the invention;
(c) a coupling agent, which is able to interconnect the organic matrix to the inorganic network by covalent bonding with both the organic and inorganic phases; said second solution comprising the following components:
(d) a hardener component, specifically chosen for the thermosetting system employed;
(e) alkaline aqueous environment, preferably water at pH≥8;
(f) an organic solvent, preferably alcoholic, most preferably ethyl alcohol;
(g) at least one metal oxide in its anionic form, such as boron, molybdenum or tungsten; capable to form links with the Si atoms of the organic network via an oxygen atom and to be released in the same form, that is metal oxide in anionic form when exposed to water environments;
(h) catalysts.

Components (a), (b) and (c) are mixed together to form the first solution, or Solution 1. Components of Solution 1 do not polymerise among them and are stable during time.

Components (d) to (h) are mixed together to form the second solution, or Solution 2. Components of Solution 2 are stable during time.

Solution 1 and Solution 2, when mixed together, give rise to the simultaneous formation of the networks that characterise the interpenetrated structure of the hybrid composition according to the invention (true IPN).

Optionally pigments and other additional components such as stabilizers, plasticizers, and fillers can be added to thesolutions.

The amounts of the above mentioned components are the following: 20-60% wt of organic component (a), 10-40% wt of polysiloxane precursors (b),1-20% wt of coupling agent (c), 5-20% wt of hardener component (d), 3-30% wt of alcoholic organic solvent (e), 1-10% wt water (f) at least 1% of metal in form of the corresponding oxide (g). Catalysts (h), fillers, other additives and pigments can be added in variable quantities.

Another object of the invention is an organic-inorganic hybrid polymer material having an interpenetrated network (IPN) made up of an organic matrix comprising at least a polymerizable thermosetting resin, at least a polysiloxane inorganic network, at least a coupling agent capable to interconnect the thermosetting resin and the inorganic network and at least a metal capable to link at least one of the Si atoms (the amount of the links being a function of the final product) of the polysiloxane via an oxygen atom (link represented as Me-O-Si). Such interpenetrated network is characterized by enhanced performances, such as corrosion resistance, hardness, thermal expansion resistance, and chemical resistance, without the need for high inorganic solid contents. The interpenetrated network (IPN) is obtainable by a process in which the precursors of the organic matrix and the inorganic network are formed simultaneously. This is possible in that the precursors, once mixed together, polymerise without macroscopic phase separation.

The polymer materials according to the invention are characterised by improved transparency, improved adhesion, improved chemical, solvent and corrosion resistance and exhibit a controlled release of corrosion inhibitors and can be used as coatings that exhibit excellent hardness, chemical resistance, fast curing, damp tolerance and are self priming with slow release of the corrosion inhibitor. In addition they can be obtained by avoiding harmless solvents and with low-temperature fast curing.

Additional objects are the uses of the compositions of the present invention as coating materials, in particular for large metal vessels, such as oil tankers and more in particular for cargo or ballast tanks, for trains, automotive vehicles and in those fields where high performance is needed. Furthermore these compositions can be used as coatings for objects which need, for example, chemical resistance, or in the production of articles such as fibre composites or as adhesives.

Further objects will become evident from the following detailed description of the invention.

### Detailed description of the invention

The present invention originates by the need to provide the market with a material capable to release, substantially in a controlled way, inorganic network modifiers, also called functional additives, such as for example corrosion inhibitors like Molybdenum oxides. In order to obtain this properties, the organic polymer matrices have to be modified in order to obtain organic-inorganic hybrids characterised by interpenetrating polymer networks (IPNs). Hybrid IPNs are intended to be made of interpenetrating organic-inorganic polymer networks connected by covalent bonds which avoid large scale (less than 300 *n*m) phase separation necessary for a fine diffusion of the inorganic phase in the organic one. Epoxy silica hybrids are particularly suitable in that epoxy resins are a good mechanical support for the brittle inorganic component which is intended to be used as a mean for obtaining the materials and properties claimed in the present invention. Furthermore the silica precursors employed in the present invention can react condensing with some inorganic components which are added in order to modify the inorganic network and obtain the properties claimed in the present invention.

The formation of a true hybrid IPN involves the formation of an inorganics rich phase which is linked to the organic phase only by a small amount of hydrocarbon chains. This condition is considered fundamental for the formation of an inorganic network structure such to obtain the controlled diffusion of the additives as claimed by the present invention.

Furthermore the step of making the IPN dense of inorganic content and diffusely branched in the inorganic matrix is not much obvious. Introducing large quantities of silica precursors such as TEOS is not obvious, as a matter of fact an organic matrix such as epoxy resin, if not properly modified, does not lead easily to interpenetrated systems with polymerised silica precursors without evident (below 300 nm) phase separation. If improperly treated these two components easily lead to phase separated systems which do not have the properties of IPNs.

Advantageous side effects deriving from the modification of the inorganic network are strong changes in mechanical and chemical properties of the final products.

The controlled release properties, of the materials according to the invention are subordinated to the formation of the hybrid IPNs between the organic matrix and inorganic network. When hybrid IPNs are not formed no control can be made on the release property and no appreciable change in mechanical and chemical properties can be observed by the additives. The need for the formation of a hybrid derives from the necessity of forming a tight and diffuse inorganic network which can be able to trap and make difficult the leaching out of the additives from the organic matrix.

The organic matrix and inorganic network should form in a basic environment in the presence of the functional additive. The basic environment grants the simultaneous formation of the networks which end to be interpenetrated because leads to fast condensation of the siloxanes and because leads to the formation of an IPN where the structure of the mixed inorganic network is such to be much branched and diffused in the organic matrix leading to a better dispersion and retention of the additive. The more the interpenetration between the organic matrix and the inorganic network is characterised by the condition of continuity the more the properties claimed by the present invention become marked. The basic environment besides allows the metal oxides, such as molybdates, not to reach a form in which they are uneffective against corrosion.

Therefore a basic environment is important to achieve a good incorporation of the functional additive in the organic-inorganic network and maintains it in an "active" form to diffuse and act as for example corrosion inhibitor or inorganic network densifier. Furthermore carrying the sol-gel polymerisation of the siloxanes in a basic environment leads to faster condensation reactions and to more branched silica structures, condition which is fundamental for the interpenetration of the organic-inorganic networks.

Another important aspect of the invention is the use of metals not in their form of metal ions must, but as metal oxides. In its oxidised form, a metal is linked covalently with oxygen and assumes very different properties from its ionic form for examples molybdates can isopolymerise whereas molybdenum ions cannot and also molybdates have corrosion inhibition properties and molybdenum ions not.

The compositions according to the present invention are obtained starting from thermosetting resins suitably combined with inorganic components that, through the sol-gel chemistry, form a hybrid polymer material that exhibits superior chemical resistance, thermal resistance, hardness, long lasting corrosion protection and low thermal expansion, fast curing rates and damp tolerance. As explained in the above, the inorganic components form a network obtained by the mixed condensations of siloxanes with other metals, preferably in the form of oxides. The metal oxides, while condensing with the siloxanes, modify the polysiloxane network making it more rigid and compact thus conferring to the final product the properties mentioned above. An important aspect of the present invention, in particular to achieve the formation of a particularly suitable inorganic network, is to obtain the solubilisation of the metal oxides, added preferably in form of inorganic salts or acids before the condensation reactions with the siloxane take place. This will allow a fast polycondensation of the inorganic precursors and the formation of the mixed oxides.

The compositions according to the present invention comprises the following components:
(a) A polymerisable organic compound selected among those forming thermosetting resins.
   Thermosetting resins are defined as resins that solidify when first heated and which cannot be remelted or remoulded without destroying their original characteristics. All the resins showing this behaviour will be considered within the scope of the present invention. A polymerisable organic compound is intended to be a thermosetting resin that, with an appropriate amount of hardener and, if necessary, a catalyst, generates a solid and infusible thermoset. The thermosetting resins useful for the present invention comprise aromatic, cycloaliphatic and aliphatic epoxy resins, phenoxy resins, polyurethanes, alkyd resins, vinyl-ester and epoxy-vinyl-ester resins. Thermosetting resins, in order to be able to form a network, contain more than one reactive group per molecule capable of reacting with the hardener compounds (d) giving life to the infusible thermoset. Thermosetting resins can also contain additional reactive groups which sometimes can play important roles in the definition of the properties of the thermoset. As a non limiting example and according to a preferred embodiment, such reactive groups can be epoxy, hydroxyl or vinyl-ester groups. The reactive groups of the thermosetting resins can also be partially reacted with the coupling agents (c) in order to introduce affinity for the polysiloxane precursors (b). The expert in the field knows about the reactivity of such groups and, together with the teachings of the present invention is able to choose the possible resin/hardner/coupling agent combinations for the final applications.
   Examples of aromatic epoxy resins used are those derived from epichlorohydrin and bisphenol-A and tetrafunctional resins such as: Epikote 828, Epikote 1005 and Epikote 1009 from Shell Chemicals, DER 331, DEN 431 and DER 669 from Dow Chemicals, XB1135-1, EPN1138, MY720 from Huntsman. Examples of aliphatic epoxy resins are those comprising hydrogenated cyclohexane dimethanol and diglycidyl ethers and hydrogenated bisphenol-A such as: Epon DPL-862, Eponex 1510, Heloxy 107 Eponex 1513 from Shell Chemicals. Preferred vinyl-ester resins are epoxy vinyl-ester resins derived from the reaction of bisphenol-A with epychlorohydrin terminated with an insaturated acid, such as as Derakane Momentum 441-400 and 441-350, produced by Dow. Preferred alkyd resins are those derived from the reaction of an organic alcohol and an organic acid dissolved and reacted with unsaturated monomers.
   Compound (a) can be used diluted in a suitable solvent, even though, according to a preferred embodiment, the presence of solvents differing from alcohols (f) in the composition of the invention should be avoided in order to prevent environmental problems.
(b) non-hydrolised Polysiloxanes precursors containing at least one organo-functional group able to react with the thermosetting resins.
   The term polysiloxane is used to denote polymers in which the chain contains alternate silicon and oxygen atoms, their properties vary with molecular weight from oils to greases to rubbers to plastics.
   The precursors of the polysiloxane components that are of interest for the present invention comprise alkoxysilanes (characterised by a single Si atom within the molecule) conventionally used in conventional sol-gel techniques, as those described in: The Physics and Chemistry of Sol-Gel Processing, C. J. Brinker, G.W. Scherer, Sol-Gel Science, Academic Press, London, 1990. They are selected among the compounds that by polycondensation in alkaline environment show glass like properties.
   Examples of suitable inorganic monomer precursors comprise alkoxydes, substituted alkoxydes, having one or more non-hydrolysable groups e.g. alkyl substitutes, nitrates, acetates or other. Preferred inorganic alkoxydes are alkoxysilanes. Suitable alkoxysilanes for use in the present invention include those having the following formula: (R1)ₘSi(OR2)ₙ where R1 is an aliphatic chain, preferably of 1-10 carbon atoms, possibly substituted with a reactive chemical group such as amine, epoxy, mercaptan, vinyl or alkoxy groups, R2 is a hydrogen atom or an aliphatic chain having preferably 1 to 10 carbon atoms, m is an integer number ranging between 0 and 3 and n is an integer number ranging between 1 and 4, being n+m=4.
   Preferred monomers comprise at least three alkoxy groups and more preferably four of such groups. A particularly preferred material is tetraethoxysilane (TEOS).
(c) Coupling agents.
   The coupling agent will be specifically chosen for the thermosetting system employed and for the final use of the hybrid material. Coupling agents will have the specific role of creating an interphase between the pure organic and inorganic phases. The interphase directly influences the mechanical and chemical properties of the hybrid. The expert, by using his knowledge in the field and by reading the present description, is able to select the coupling agent suitable for the application desired.
   Preferred coupling agents are those having general alkoxysilane formula (R1)ₘSi(OR2)ₙ, with m = integer number ranging between 1 and 3, n is an integer number ranging between 1 and 3, being n+m=4, R1 = aliphatic chain, preferably of 1-10 carbon atoms, and substituted with a chemical group such as amine, epoxy, mercaptan, vinyl or alkoxy groups, capable to react with the selected thermosetting resin and to allow interconnections between the organic matrix and the inorganic network, R2 is a hydrogen atom or an aliphatic chain having preferably 1 to 10 carbon atoms.
   Examples of suitable coupling agents for epoxy resin are: γ-bis-aminopropyltrimethoxysilane (A-1170, Crompton), γ-mercaptopropyltrimethoxysilane (A-189, Crompton), glicydoxypropyltrimethoxysilane (GOTMS) (A187, Crompton), phenyltrimethoxysilylpropylamine (Y9669, Crompton) and γ-aminopropyltriethoxysilane (A-1100, A1102, Crompton). Examples of suitable coupling agents for vinyl-ester resins are: vinyltriethoxysilane (A-151, Crompton) vinyltrimethoxysilane (A-171, Crompton), methacrylate trimethoxysilane and methacrylate triethoxysilane. The reactive groups of the mentioned coupling agents are implicit in the respective chemical names.
   A composition may contain variable quantities of silica originating either from the coupling agent (c) and the polysiloxanes precursors (b) depending on the amount of silica desired in the composition, more silica content deriving from (b) will need more coupling agent (c) for the compatibilisation of the inorganic component to be achieved. For example, in order to have a silica content of 5% wt in a composition, the weight ratio between TEOS and a A1170 coupling agent should be approximately 1.5, whereas the ratio should be approximately 5 for compositions with 25% wt of silica content.
(d) A hardener component specifically chosen for the thermosetting system employed and for the final use of the hybrid material. The expert, by using his knowledge in the field and by reading the present description, is able to select the hardener suitable for the application desired.
   Preferably the hardener is added to the composition in a premix with the alcoholic solvent (f) and water and in amounts effective to start the hydrolysis process of the alkoxysilanes.
   As a non limiting example, the hardener for epoxy based systems comprises aliphatic, cycloaliphatic and aromatic amines and preferably primary difunctional amines, molecules containing at least two -NH2 groups such as 4-4'-metilenbis-cyclohexylamine (PACM). Preferred hardener amounts range between 0.65 and 1.25 in terms of stoichiometric ratio between the amine group to the epoxy groups of the epoxy resin.
   The hardener for vinyl-ester resins comprises olefinic compounds, such as styrene, to be used in quantities ranging between 30 and 50 percent in weight compared to the organic component (a). The expert, by using his knowledge in the field and by reading the present description; is able to select the hardener suitable for the application desired.
   Preferably the hardener is added to the composition in a premix with the alcoholic solvent (f) and water and in amounts effective to start the hydrolysis process of the alkoxysilanes.
(e) Water is an important ingredient of the compositions of the present invention in that, being responsible of the hydrolysis and condensation processes, it is essential for the formation of the inorganic network. Water can come from the atmospheric moisture or can be added to the formulation directly, especially in arid environments. A composition contains up to a stoichiometric water content with respect to the alkoxysilane and preferably the moles of water for 1 mole of alkoxysilane components are comprised between 1 and 4.
(f) An organic solvent, preferably alcoholic. A preferred alcoholic solvent is ethanol and preferably it is added in a molar amount equal to the water added.
(g) At least one metal compound, in form of metal oxide in its anionic form.
   In the present description, the term "oxide" will indicate generically all the forms in which the metal will be added to the composition, as detailed in the following.
   Preferred metals are those forming inorganic acids and they can be used, alone or in mixtures, in the form of acids or corresponding derivatives such as their salts. Particularly preferred are molybdic acid, boric acid and tungstic acid and corresponding salts such as ammonium molybdate or sodium borate. The metals, in this form, according to the principles of the present invention, condense with the polysiloxane precursors of the (b) component and with their by-products (precursors and oligomers) of hydrolysis and condensation generated during the sol-gel reactions. These metals form links with the Si atoms via an oxygen atom (link represented as Me-O-Si) that generate modifications in the network to improve the performances of the final hybrid material. Such modifications can be detected either directly, with spectrometric techniques such as FTIR (Fourier Transform Infra Red), or indirectly. Indirect techniques such as ICP (Induced Coupled Plasma) or X-Ray scattering allow us to determine qualitatively and quantitatively the presence of such metals.
   For example, with atomic absorption techniques like ICP it is possible to measure the quantity of metals released, when they are properly extracted. It can be quantified that a thermosetting resin, after an immersion in water at about 80°C for about 48 hours, releases almost entirely the metal oxide, whereas after the same time a hybrid material according to the present invention, can release approximately only about 5% of the initial amount of metal (in terms of metal oxide). Therefore hybrid materials, according to the present invention, release much less metals than the corresponding unmodified thermosetting resins. Other indirect ways for the identification of the presence of a modified hybrid network, according to the principles of the present invention, is a simple chemical resistance test. In fact, the addition of small amounts of molybdates (3% wt), for example, enhances largely the resistance to swelling of a post-cured hybrid. In presence of a solvent, such as tethrahydrofurane (THF), the absorption rate is reduced up to five times and Glass Transition Temperature is increased up to 50°C.
   Preferred compositions contain amounts of the (g) components ranging between 1% and 20% by weight compared to the solid content of the final product obtained according to the present invention. In particular it was found very effective a content of about 6% by weight in a hybrid containing about 15% in weight of silica content.
(h) Catalysts. At least one type of catalyst has to be present for the good formation of the hybrid material and this is the catalyst suitable for the inorganic network, preferably a tin based catalyst. A particularly preferred catalyst is dibutyl tin dilaurate (DBTDL). Without the presence of this component the inorganic part of the network will not be formed adequately and some characteristics of the hybrid, such as the chemical resistance, will be weaker.
   Preferably, to the tin based catalyst it is possible to add N-benzyldimethylamin, useful for increasing the density and the rate of formation of the hybrid network.
   It has been verified experimentally that when GOTMS coupling agent is used, the addition of N-benzyldimethylamin enhances the chemical resistance delaying the swelling of the network due to absorption of solvents.
   An optional catalyst is a catalyst for the organic part of the hybrid. For example, preferred catalysts useful for the rapid formation of the organic matrix based on vinyl-ester resins are cumene hydroperoxide and metyl-ethyl-ketone peroxide (MEKP).

Optionally, pigments, and other additives such as fillers can be added to the composition of the invention.

Suitable pigments may be selected from organic and inorganic color pigments which may include titanium dioxides, carbon black, lampblack, natural and synthetic red, yellow, brown and black iron oxides, toluidine and benzidine yellow, phtalocyanine blue and green and extender pigments including ground and crystalline silica, calcium silicate, aluminum hydroxide, micaceous iron oxide, zinc powder, feldspar and the like. The amount of pigments used to form the composition vary depending on the particular composition and application. A preferred composition may comprise up to about 50% by weight of fine particle size pigments.

Additional components for the compositions of the present invention can be rheological modifiers, plasticisers, tixotropic agents, flame retardants, diluents, UV stabilizers, antifouling agents and fluorine-rich organic compounds. A preferred composition may comprise up to a 20% by weight of such functional additives.

A process to obtain the composition according to the invention preferably comprises the steps of preparing two premixtures called Solution 1 and Solution 2. Solution 1 is obtained by mixing together components (a) and (c), preferably at a temperature ranging between 50 and 90°C. Afterwards an amount of precursor (b) is added. Solution 1 is stable at room temperature and can be stored until its use.

Solution 2 is obtained by mixing together a first mixture comprising an amount of the metal (g) previously dissolved in alkaline aqueous environment (e) at a temperature ranging between 40 to 60°C, and a second mixture comprising an amount of hardener (d), an amount of solvent (f) approximately 1/1 molar ratio compared to component (e) and at least one catalyst (h); the first and second mixtures being warmed at 40-60 °C and said first solution being slowly added to the second solution, thus obtaining Solution 2. Such Solution 2 can be stored until its use.

On use, Solution 1 and Solution 2 are mixed together and, after mixing, both the cross-linking reactions of the organic matrix and the formation of the inorganic network, by sol-gel process, take place. The composition obtained by mixing together Solution 1 and Solution 2 can be directly used in mixture with additional components to obtain manufactured articles or as a coating to be applied on surfaces.

Preferably the process to obtain the composition according to the invention comprises the following steps:
i) to at least one polymerizable organic compound (a) a coupling agent (c) is added. Preferably a mixture of compounds (a) can be selected, all belonging to the same chemical group or family (for example the family of epoxy resins); also preferred is a molar ratio ranging between 1/3 and 1/100 of the coupling agent (c) with respect to the reactive groups of the compound (a);
ii) the thus obtained mixture is mixed for a period of time ranging between 5 to 60 minutes at a temperature ranging between 50 and 90 °C, and then an amount of polysiloxane precursor (b) is added; the thus obtained solution is called Solution 1;
iii) separately an amount of the metal (g) is dissolved in water at a temperature ranging between 40 to 60°C. The water content depends on the polysiloxane content and it can be preferably about 3/1 (water/polysiloxane precursor) molar ratio;
iv) separately a mixture is prepared by mixing together an amount of hardener (d) at least sufficient for the formation of the organic matrix, an amount of alcohol (f) approximately 1/1 molar ratio compared to water and at least one catalyst (h);
v) the solutions obtained in steps (iii) and (iv) are warmed at 40-60 °C, then the solution of step (iii) is slowly added to the solution of step (iv) thus leading to a new solution, called Solution 2.

On use; Solution 1 and Solution 2 are mixed and, after mixing, both the cross-linking reactions of the organic matrix and the formation of the inorganic network, by sol-gel process, take place. The sol-gel process involves the hydrolysis and condensation of the coupling agents (c), of the polysiloxane precursors (b) and the formation of the mixed inorganic network by the co-condensation of the polysiloxanes with the metals (g). Solution 1 and Solution 2 are mixed in a weight or volume ratio depending on the ratio of the components of the formulation in order to obtain the final hybrid compound that, after curing, can be subjected to a post curing treatment. As an indication, coatings having thickness of approximately 300 micrometers could be cured at least 24 hours at room temperature (about 25°C) before service life. However the application of such coatings can be done in a wide temperature range from -10 to +50 °C. More generally the post curing can be performed at temperatures ranging between 80 to 150°C for a period of time ranging between 0.5 to 48 hours, preferably 0.5 to 24 hours.

According to a preferred embodiment of the invention, the steps of the process herein above described, can be performed as follows:
(i) two epoxy resins are selected, among those of the component (a), or similar available on the market, in order to compose the organic matrix. The need for blending resins comes from the necessity of obtaining a compromise of properties and costs. The expert in the field can choose the resins depending on the application needs. For example a resin blend can be prepared by combination of a novolack resin DEN431 with a high molecular weight DER 669 epoxy resins mixed in the ratio 10/1. A solvent can be added in order to modify the viscosity. The coupling agent (c) is chosen according to the properties required in the final product.
(ii) The coupling agent and the thermosetting resin blend are mixed in a molar ratio with the epoxy groups of 1/10 for a period of time of 30 minutes at 90 °C. To this solution the polysiloxane precursor (b) TEOS, until transparency is reached, and then the thus obtained mixture is cooled at room temperature. The quantity of TEOS added is such to obtain an amount of silica content deriving from polysiloxanes of 10% wt in respect to the total solid content and in this manner polysiloxanes precursors are not subjected to pre-hydrolysis (pre-hydrolysed polysiloxane precursors slowly but unavoidably condense thus causing hardening of solution 1, thus shortening shelf life) the thus obtained solution Solution 1 is stable;
(iii) separately ammonium molybdate, in the amount of 6% wt with respect to the total solid content, is added to water until dissolution at a temperature of 60 °C. The amount of water depends on the TEOS content and it can be quantified approximately to be 3/1 (water/TEOS) molar ratio;
(iv) separately a solution of the hardener PACM is prepared at room temperature by mixing this component with ethyl alcohol and DBTDL catalyst. The amount of hardener can be quantified to be less than stechiometric compared to the epoxy resins reactive groups, the quantity of alcohol will be approximately 1/1 molar ratio compared to water and the catalyst will have to be approximately 0.05% wt of the alcohol-water-alkoxysilanes system;
(v) the hardener solution obtained in step (iv) and the water solution obtained in step (iii) are mixed together at a temperature preferably higher than 50°C and stirred for 10 minutes; the thus obtained solution is Solution 2.

Solution 1 and Solution 2 can be stored indefinitely until mixing. On use they are mixed at room temperature and homogenised by stirring. The mixing proportions of Solutions 1 and 2 is approximately 4 to 1 wt. The materials obtained in this way, for a thickness of approximately 300 micrometers, should be cured at least 24 hours at room temperature (25°C) before service life but can be post-cured depending on application/needs.

The materials obtained following the above procedure show properties which depend also on the time and temperature of curing, post-curing and on the thickness. The materials, produced following the principles of the present invention, are of interest because their chemical and physical properties are superior to those of the resins not modified following these principles, even after the room temperature curing (24 hours). After post-curing (80 - 120°C for a period of time comprised between 1 and 24 hours) the mechanical properties and the chemical resistance of the unmodified materials increase but never exceeds the materials formed following the principles of the invention.

These compositions, can be sold in a two package system (Solution 1 and Solution 2) and can be used in the field of adhesives, for the production of composites, for example fiber composites, and in coating technology, where can be applied by brush, roll or with spraying equipment, especially on iron and steel but also on wood, concrete and stone at various thickness depending on application needs. The compositions exhibit excellent hardness, chemical resistance, fast curing, damp tolerance and are self priming with slow release of a corrosion inhibitor or of functional additives, such as biocides.

The compositions can be used in particular as a coating for example in the marine field, for yachts and for large metal vessels, such as oil tankers and more in particular for cargo or ballast tanks and on hulls. The coatings can be used also for the maintenance and protection of surfaces used for manufacturing trains, automotive vehicles and in electric applications such as for the production of dielectric shields and in those fields where high performances are needed such as: for chemical protection, for room temperature fast curing applications, as high gloss decorative coating, as coating to prevent the formation of fouling, as coating to prevent oxidation, degradation and pollution.

A peculiar application of the coatings, according to the present invention, is for preventing graffiti. The coating cured at room temperature, once dirtied, can be easily cleaned with water or weak solvents such as ethyl alcohol, or other solvents, without being evidently affected. Another application can be the treatment of concrete or stone or plastic surfaces in order to prevent degradation and pollution. Other applications can be found as electrical shielding. Using appropriate combinations of pigments and resins the hybrids of the present invention constitute a very effective high voltage dielectric.

The chemical and physical properties of the compositions of the present invention depend very much on the choice of the single components (a) to (h) and their relative quantities. The compositions of this invention show superior chemical resistance and mechanical properties and better corrosion resistance. These are unexpected improvements in properties because they are not observed when the indicated metals (boron, molybdenum and tungsten compounds) are added to the organic resin in the absence of the modified polysiloxane network. The compositions of the present invention show an unexpected increase in thermal resistance, chemical resistance, in protection against corrosion, in hardness, transparency and a lower and more uniform expansion coefficient compared to the unmodified resins. Toxicological and environmental problems are inevitably linked to the use of additives such as solvents and diluents which are conventionally used in the production of epoxy paints therefore the present invention presents an innovative solution to these problems because offers excellent material properties without the need of those additives, allowing also to work in confined areas such as vessels tanks without complications due to the evaporation of toxic solvents.

Furthermore the fast curing characteristics of the materials of the present invention makes the applications rapid and reduces costs as in coating applications when long re-coating times would slow down the all process.

The following examples are give to illustrate the invention and should not be considered as limiting the scope thereof.

The examples describe the preparation of the compositions according to the invention. In each example the types and proportion of the components are varied.

The compositions were tested for mechanical properties, chemical resistance, corrosion resistance and corrosion inhibitor release. The results were compared with those obtained on the corresponding unmodified resin (reported in examples 6 and 7) and with those obtained on a composition modified only with polysiloxanes, in the absence of the metal oxides (boron, molybdenum, tungsten) (reported in example 8). All the compositions were cured and post-cured under the same conditions (i.e. 24 hours at room temperature + 24 hours at 120°C) the samples tested were 0.5 mm thick. The results are shown in table 1.

### Materials

DER331, bisphenol-A epoxy resin MW <700, DER669, bisphenol-A epoxy resin MW <5000 (both from Dow);
TEOS, tetraethoxysilane, A1170, γ-bis-aminopropyltrimethoxysilane (both from Osi specialties);
Amicure PACM, 4-4'-methylenebis-cyclohexylamine (Air Products);
DBTDL, dibutyl tin dilaurate, (NH4)2MoO4, ammonium molybdate, H3BO3, boric acid, H2WO4, tungstic acid, Ethanol 99% (Aldrich)

### Example1

A resin blend (solution 1) was prepared by combining 9 g of DER 331, 1 gram of DER 669 and 1.8 g of the coupling agent A1170. After mixing the ingredients for 15 minutes, in a glass tube with a magnetic stirrer at 60°C, the solution was mixed with 7.8 g of TEOS and cooled at room temperature. In a another glass tube 0.9 gram of finely ground ammonium molybdate were dissolved in 1.35 g of water, by mixing at 60°C for 30 minutes, and added, while stirring, to a solution containing 1.93 g of PACM, 5.2 g of ethanol and 0.05 g of DBTDL (solution 2). Solutions 1 and 2 were mixed at room temperature and stirred until the solution became transparent and than was cast on a Teflon mould for curing.

### Example 2

Same ingredients and procedure described in Example 1 were repeated, except that 0.45 g instead of 0.9 g of finely ground ammonium molybdate were used.

### Example 3

A resin blend (solution 1) was prepared by combining 10 g of DER 331 and 1.8 g of the coupling agent A1170. After mixing the ingredients for 15 minutes, in a glass tube with a magnetic stirrer at 60°C, the solution was mixed with 7.8 g of TEOS and cooled at room temperature. In a another glass tube 0.17 g of finely ground boric acid were dissolved in 1.35 g of water, by mixing at 60°C for 30 minutes, and added, while stirring, to a solution containing 1.93 g of PACM, 5.2 g of ethanol and 0.05 g of DBTDL (solution 2). Solutions 1 and 2 were mixed at room temperature and stirred until the solution became transparent and than was cast on a Teflon mould for curing.

### Example 4

Same ingredients and procedure described in Example 3 were repeated, except that 0.72 g of finely ground tungstic acid were used instead of 0.17 g of finely ground boric acid.

### Comparison Example 5

A resin blend (solution 1) was prepared by combining 10 g of DER 331 and 4.6 g of the coupling agent A1170. After mixing the ingredients for 15 minutes, in a glass tube with a magnetic stirrer at 60°C, the solution was mixed with 16.7 g of TEOS and cooled at room temperature. In a another glass tube were mixed sequentially 2.9 g of water, 1.7 g of PACM, 11.1 g of ethanol and 0.05 g of DBTDL (solution 2). Solutions 1 and 2 were mixed at room temperature and stirred until the solution became transparent and than was cast on a Teflon mould for curing.

### Comparison example 6

10 g of DER 331 epoxy resin were mixed at room temperature with 2.14 g of PACM and stirred until the solution became transparent and than was cast on a Teflon mould for curing.

### Comparison example 7

0.45 g of finely ground ammonium molybdate were mixed to 10 g of DER 331 epoxy resin. The mixture was added, at room temperature, to 2.14 g of PACM and stirred until the solution became transparent and than was cast on a Teflon mould for curing.

### Comparison example 8

Same ingredients and procedure described in Comparison Example 5 were repeated, except that 1.8 g of A1170 were used instead of 4.6 g, 7.8 g of TEOS instead of 16.7g were used in solution 1. Solution 2 was made up by 1.35 g of water, 1.93 g of PACM, 5.2 g of ethanol and 0.05 g of DBTDL.

### Comparison example 9

Following the principles of Example 1 of US Patent 5,120,811, two solutions were prepared mixing 93.4 g of TEOS with 32.5 g of water and with sufficient hydrochloric acid for the solution to have pH=2 and mixing 55 g of GOTMS with 13.5 g of water and with sufficient hydrochloric acid for the solution to have pH=2. After 45 minutes of stirring, the two solutions were mixed together and stirred for 30 minutes and solution 1 was obtained. To solution 1 were added 10 g of ERL-4221 Epoxy resin and 0.6 g og FX-512 photoinitiator and than the mixture was stirred at room temperature for 15 minutes prior to coating.

### Comparison example 10

Following the principles of Example 2 of US Patent 4,250,074, an organic inorganic polymer composition was prepared mixing together two components: 14 g of DER671 epoxy resin (solution 1) and 1.48 g of N-(2-aminoethil)-3-aminopropyltrimethoxysilane (solution 2). Solutions 1 and 2 were mixed at room temperature prior to coating.

### Comparison example 11

To the solution 1 obtained in Comparison Example 9, were added 10 g of ERL-4221 Epoxy resin, 0.6 g of FX-512 photoinitiator obtaining solution 2. To 10 g of solution 2 were added 0.45 g of finely ground ammonium molybdate and than the mixture was stirred at room temperature for 15 minutes prior to coating.

### Comparison example 12

Solutions 1 and 2 obtained in Comparison Example 10 were mixed together and added of 0.69 g of finely ground ammonium molybdate. After stirring for 15 minutes the final mixture was ready for coating.

As far as Comparison Examples 11 and 12 are concerned, the materials obtained in Comparison Examples 9 and 10 respectively were added of ammonium molybdate at the last stage of the preparation just during curing. Molybdates were added in the amount of 1% in weight of the overall compositions. While the materials obtained in Comp. Ex. 12 appeared uniform in color and size those obtained in Comp. Ex. 11 did not match the same properties, in particular they were brittle and of difficult handling thus producing not reliable results. Such results are most likely due to the acid environment. Finally: Molybdates have been chosen as example of metal oxides modifiers of the inorganic network because their effect on the solvent absorption attitude is the strongest registered therefore it is the easiest to detect in a demonstration.

### Post curing conditions:

After a curing period of 24 hours at room temperature the materials obtained have been post cured at 120°C for 24 hours and at 150°C for 2 hours.

### Evaluation of compositions

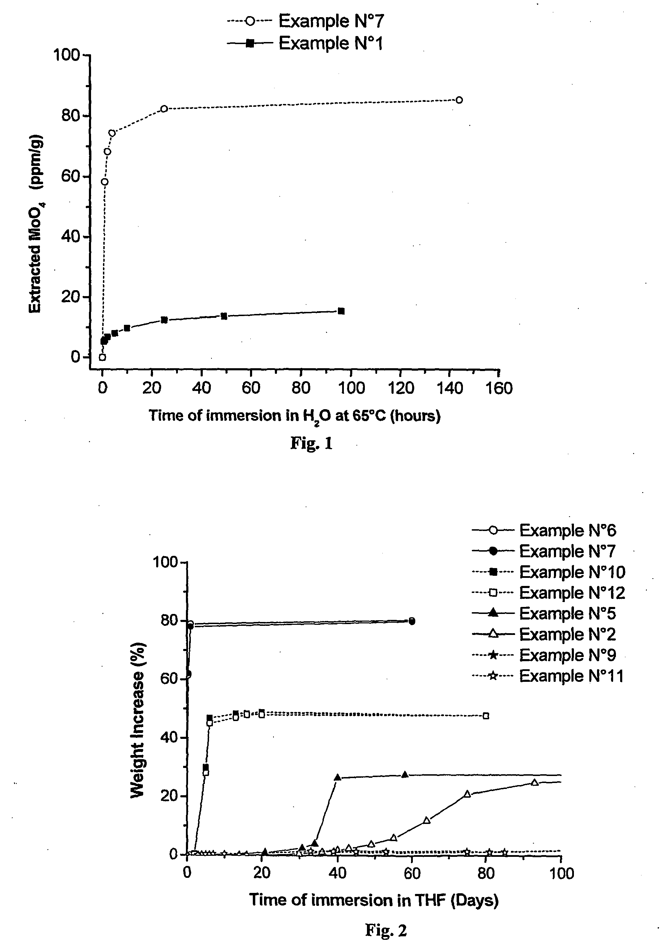

A) Thermal expansion of the materials was measured in the temperature range between 20 and 150 °C with a DuPont 990 Thermal Analyser. The level of thermal expansion was rated between 1 (lower expansion coefficient) and 3 (higher expansion coefficient).
B) The softening behaviour at high temperatures was assessed with a Dynamic Mechanical Thermal Analyser model MK III, from Polymer Laboratories. The glass transition temperature was used as an indication for the softening point, defined as the temperature of the tan δ peak. A rating value between 1 (lowest) and 5 (highest) was assigned to the obtained Tg values,
C) Hardness was tested with a Du-Pont nano-hardness analyser measuring the penetration depth of a sharp indenter into the surface of the samples. To the hardness value obtained was given a rating number between 1 (less hard) and 3 (more hard).
D) The corrosion tendency was measured, indirectly, with a Hewlett-Packard potentiometer connected to a calomel reference electrode at room temperature. Iron plates were coated with a 0.3 mm layer of coating and grooved (grooves dimensions 2x20 mm) in order to expose the metal to a corrosive environment, that is sea-like salted water, containing 3,5% wt sodium chloride. In this test higher corrosion potential values denote a lower tendency to corrosion. The corrosion tendency was rated with a number between 1 (lower corrosion tendency)and 2 (higher corrosion tendency).
G) The gel-time was measured observing the time at which a drop of liquid material stops from flowing on a slope of 25 degrees (gel point). The experiments were done at 20°C on metal plates. To the gel time was given a rating value between 1 (faster gelation) and 5 (slower gelation).
E) The diffusion tendency of species containing either molybdenum or boron was measured with the use of an Inductively Coupled Plasma (ICP) Thermo-Jarrell-Ash Thermo-scan-16. Specimens 40x10x0.3 mm were prepared and deepen in water at 70°C. Samples of water were taken at different time intervals and the concentration of diffused inhibitor was measured. To the diffusion tendency, calculated as percentage of extracted metal oxide after 24 hours of immersion in water at 70 °C, was given a rating number between 1 (slower diffusion) and 5 (faster diffusion). For direct comparison Fig. 1 shows the release properties of compounds prepared according to Ex. 1 (according to the invention) and Ex. 7 (pure epoxy resin modified with ammonium molybdates). The graph in Fig. 1 refers to the concentration of molybdates in a water solution versus time. As evident, the property of controlling release of certain metal oxides such as molybdates is peculiar only of the materials according to the present invention. The pure epoxy resin released 35% of the total amount of molybdates in less than one day, whereas the hybrid released less than 5% after three days.
F) The chemical resistance was assessed as the tendency to absorb solvents. Specimens 40x10x0.5 mm were immersed in THF and weighted at the beginning and periodically in order to measure both the induction time and the total amount of solvent absorption (weight increase %). The quantity of solvent absorbed was measured with a four decimal digits scale. The induction time is identified as the time needed for the solvent to initiate the penetration into the material, the total quantity of solvent absorbed is identified as the maximum quantity of solvent that a specimen of material can absorb. To both these measures were assigned rating values between 1 (lower absorption tendency) and 10 (higher absorption tendency).

The controlled release property of the epoxy-silica hybrids according to the present invention is obtained thanks to the property of polysiloxane precursors to form a mixed inorganic network with the molybdates. As a matter of fact, up to our knowledge, molybdates have poor or no effect on the physical properties of pure epoxy resins as shown in Fig. 2. When molybdates form a mixed inorganic network with the polysiloxanes it is possible to obtain real advantages in retarding the solvent absorption process of the materials whereas when it does not the property remains approximately unchanged.

The strong effect of molybdates can be noted only on the solvent absorption behavior of the hybrid material object of the present invention and this has been demonstrated by comparing the effect of molybdates also on other epoxy silica compositions (Comparison Examples 9 and 10).

**Table 1: Results**

| | Ex.1 | Ex.2 | Ex.3 | Ex.4 | Ex.5 | Ex.6 | Ex.7 | Ex.8 |
|---|---|---|---|---|---|---|---|---|
| Coefficient of expansion | 1 | 1 | 1 | 2 | 1 | 3 | 3 | 2 |
| Softening point | 5 | 4 | 4 | 3 | 2 | 1 | 1 | 2 |
| Hardness | 1 | 1 | - | - | 1 | 3 | 3 | 2 |
| Corrosion resistance | 1 | 1 | - | - | 2 | 2 | 2 | 2 |
| Inhibitor diffusion | 1 | 2 | 2 | - | - | - | 5 | - |
| Induction time | 1 | 1 | 1 | 5 | 1 | 10 | 10 | 5 |
| Total solvent absorbed | 2 | 2 | 2 | 2 | 1 | 10 | 10 | 3 |
| Gel-time | 1 | 2 | - | - | 1 | 5 | 5 | 3 |

The compositions according to this invention displayed:
A) a lower thermal expansion coefficient
B) a higher Tg
C) a higher hardness
D) a lower tendency to corrosion
E) a shorter gel time
   than both the unmodified epoxy resin and the corresponding silica hybrids without molybdenum, boron and tungsten elements;
F) a lower tendency to release, in the environmental medium, the elements molybdenum and boron
G) a higher resistance to solvent penetration than the unmodified epoxy resin and
   those where molybdenum, boron or tungsten elements were not present

For a better illustration of the results expressed as ratings in Examples 1 to 8 the corresponding range of values for each property considered are shown in table 2. Table 2: Range of values for the given property rating for results in Table 1

| | Coefficient of thermal expansion | Softening point | Hardness | Corrosion resistance | Inhibitor diffusion | Induction time | Tot. solvent absorbed | Gel time |
|---|---|---|---|---|---|---|---|---|
| | (°C)⁻¹ | °C | µm | mV | % wt | Days | % wt | Hours |
| Range: lowest-highest | 3.5*10⁻⁵ - 2.5*10⁻⁴ | 60 - 130 | 2.5 - 4.5 | -640 - -690 | 5 - 95 | 0.01 - 60 | 0.1 - 80 | 0.3 - 4 |

Although epoxy and modified polysiloxane compositions of the present invention have been described with details with reference to certain preferred aspects thereof, other variations are possible. Therefore, the scope of the appended claims should be not limited to the preferred variations described herein.

## Claims

1. Polymer composition prepared by combining a first and a second separately prepared solutions, said first solution comprising the following components:
(a) a polymerisable organic compound selected among those producing thermosetting resins;
(b) non-hydrolised polysiloxanes precursors **characterised in that** they have a single Si atom in the molecule, linked directly or by means of an O atom, to four C atoms;
(c) a coupling agent, which is able to interconnect the organic matrix to the inorganic network by covalent bonding with both the organic and inorganic phases;
said second solution comprising the following components:
(d) a hardener component, specifically chosen for the thermosetting system employed;
(e) alkaline aqueous environment, preferably water at pH≥8;
(f) an organic solvent, preferably alcoholic, most preferably ethyl alcohol;
(g) at least one metal oxide in its anionic form, capable to form links with the Si atoms via an oxygen atom and to be released in the same form, that is metal oxide in anionic form when exposed to water environments;
(h) catalysts.

2. Polymer composition according to claim 1 further comprising: pigments, stabilizers, fillers, rheological modifiers, plasticisers, tixotropic agents, flame retardants, diluents, UV stabilizers, antifouling agents and fluorine-rich organic compounds.

3. Polymer composition according to claim 1 wherein the components are present in the following amounts: 20-60% wt of organic component (a), 10-40% wt of polysiloxane precursors (b),1-20% wt of coupling agent (c), 5-20% wt of hardener component (d), 3-30% wt of organic solvent, preferably alcoholic (e), 1-10% wt water (f), at least 1% of metal oxide (g).

4. Polymer composition according to claim 1 wherein the thermosetting resin is selected in the group of aromatic, cycloaliphatic and aliphatic epoxy resins, phenoxy resins, alkyd resins, vinyl-ester and epoxy-vinyl-ester resins.

5. Polymer composition according to claim 4 wherein the aromatic epoxy resins are those derived from epichlorohydrin and bisphenol-A, the aliphatic epoxy resins are those derived from hydrogenated cyclohexane dimethanol and diglycidyl ethers of hydrogenated bisphenol-A type epoxy resins, the epoxy vinyl-esters resins are derived from the reaction of bisphenol-A with epychlorohydrin terminated with an unsaturated acid and the alkyd resins are those derived from the reaction of an organic alcohol and an organic acid dissolved and reacted with unsaturated monomers.

6. Polymer composition according to claim 1 wherein the polysiloxanes precursors comprise alkoxydes and substituted alkoxydes, having one or more non-hydrolysable groups.

7. Polymer composition according to claim 6 wherein the alkoxydes are alkoxysilanes having formula: (R1)ₘSi(OR2)ₙ where R1 is an aliphatic chain possibly substituted with a reactive chemical group such as amine, epoxy, mercaptan, vinyl or alkoxy groups, R2 is a hydrogen atom or an aliphatic chain, m is an integer number between 0 and 3 and n is an integer number between 1 and 4, being n+m=4.

8. Polymer composition according to claim 6 wherein the alkoxyde is tetraethoxysilane.

9. Polymer composition according to claim 1 wherein the coupling agent (c) is an alkoxysilane formula having formula (R1)ₘSi(OR2)ₙ, where m is integer and ranging between 1 to 3, n is an integer number ranging between 1 and 3, being n+m=4, R1 is an aliphatic chain substituted with a chemical group selected in the group of amine, epoxy, mercaptan, vinyl or alkoxy groups, capable to react with the selected thermosetting resins, R2 is a hydrogen atom or an aliphatic chain having preferably 1 to 10 carbon atoms.

10. Polymer composition according to claim 9 wherein the coupling agent for epoxy resin is selected in the group of: γ-bis-aminopropyltrimethoxysilane, γ-mercaptopropyltrimethoxysilane, glicydoxypropyltrimethoxysilane, phenyl-trimethoxy-silylpropylamine, γ-aminopropyltriethoxysilane.

11. Polymer composition according to claim 9wherein the coupling agent for vinyl-ester resins is selected in the group of: vinyltriethoxysilane, vinyltrimethoxysilane, methacrylate trimethoxysilane, methacrylate triethoxysilane

12. Polymer composition according to claim 1 wherein the hardener component (d) for epoxy based systems is selected in the group of: aliphatic, cycloaliphatic and aromatic amines and preferably primary difunctional amines, whose molecules contain at least two -NH2 groups such as 4-4'-methylene bis-cyclohexylamine.

13. Polymer composition according to claim 1 wherein the hardener component (d) for vinyl-ester resins is selected in the group of: olefinic compounds, such as styrene.

14. Polymer composition according to claim 1 wherein the alcoholic solvent (f) is ethanol.

15. Polymer composition according to claim 1 wherein the inorganic metal compound is in form of a metal oxide or inorganic acid or corresponding salt

16. Polymer composition according to claim 1 wherein the metal compound is in form of the corresponding acid and is selected in the group of: molybdic acid, boric acid and tungstic acid and corresponding salts.

17. Polymer composition according to claim 1 wherein the catalyst (h) is a tin based catalyst.

18. Polymer composition according to claim 17 wherein the catalyst is dibutyl tin dilaurate.

19. Polymer composition according to claim 17 further comprising cumene hydroperoxide and metyl-ethyl-ketone peroxide.

20. Coatings or manufactured articles comprising the composition according to claims 1-20.

21. Organic-inorganic hybrid polymer material **characterised by** an interpenetrated network made up of an organic matrix comprising at least a polymerizable thermosetting resin, at least a polysiloxane inorganic network, at least a coupling agent capable to interconnect the thermosetting resin and the inorganic network by covalent bonding and at least a metal capable to link at least one of the Si atoms of the polysiloxane via an oxygen atom, said material being obtained by mixing together at room temperature Solution 1 and a Solution 2, said Solution 1 containing: (a) a polymerisable organic compound selected among those producing thermosetting resins; (b) non-hydrolised polysiloxanes precursors **characterised in that** they have a single Si atom in the molecule, linked directly or by means of an O atom, to four C atoms; (c) a coupling agent, which is able to interconnect the organic matrix to the inorganic network by covalent bonding; and said Solution 2 containing: (d) a hardener component, specifically chosen for the thermosetting resin employed; (e) alkaline aqueous environment; (f) an organic solvent, preferably alcoholic, most preferably ethyl alcohol; (g) at least one metal oxide in its anionic form, capable to form links with the Si atoms of the organic network via an oxygen atom and to be released in the same form, that is metal oxide in anionic form when exposed to water environments; (h) catalysts.

22. Organic-inorganic hybrid polymer material according to claim 21 **characterized in that,** after an immersion in water at about 80°C for about 48 hours, releases approximately 5 to 10 % of the initial amount of the metal added to it in form of metal oxide.

23. Use of the organic-inorganic hybrid polymer material according to claims 21-22 as coating for surfaces made of metal, steel, wood, plastics, concrete and stone.

24. Use of the organic-inorganic hybrid polymer material according to claims 21-22as coating for chemical protection.

25. Use of the organic-inorganic hybrid polymer material according to claims 21-22 as coating for room temperature fast curing applications.

26. Use of the organic-inorganic hybrid polymer material according to claims 21-22 as high gloss decorative coating.

27. Use of the organic-inorganic hybrid polymer material according to claims 21-22 as anti fouling coating.

28. Use of the organic-inorganic hybrid polymer material according to claims 21-22 as coating to prevent graffiti.

29. Use of the organic-inorganic hybrid polymer material according to claims 21-22 as coating to prevent oxidation, degradation and pollution.

30. Use of the organic-inorganic hybrid polymer material according to claims 21-22 as a dielectric.

31. Use of the organic-inorganic hybrid polymer material according to claims 21-22 for the production of articles such as fiber composites or as adhesives and fillers.

32. Use of the organic-inorganic hybrid polymer material according to claims 21-22 for the production of artistic articles.

33. Process to obtain the organic-inorganic hybrid polymer material according to claims 21-22, said process comprising the steps of preparing Solution 1 by mixing together components (a) and (c) and then an amount of precursor (b) is added; preparing Solution 2 by mixing together a first mixture comprising an amount of the metal oxide in its anionic form (g) previously dissolved in alkaline aqueous environment (e) at a temperature ranging between 40 to 60°C, and a second mixture comprising an amount of hardener (d), an amount of solvent (f) approximately 1/1 molar ratio compared to component (e) and at least one catalyst (h); the first and second mixtures being warmed at 40-60 °C and said first solution being slowly added to the second solution, thus obtaining Solution 2; said Solution 1 and Solution 2 being mixed together on use.

34. Process to obtain the organic-inorganic hybrid polymer material according to claims 21-22, said process comprising the following steps:
i) to at least one polymerizable organic compound (a) a coupling agent (c) is added;
ii) the thus obtained mixture is mixed for a period of time ranging between 5 to 60 minutes at a temperature ranging between 50 and 90 °C, and then an amount o polysiloxane precursor (b) is added; the thus obtained solution being called Solution 1;
iii) separately an amount of the metal in its anionic form (g) is dissolved in akaline aqueous environment (e) at a temperature ranging between 40 to 60°C;
iv) separately a mixture is prepared by mixing together an amount of hardener (d) at least sufficient for the formation of the organic matrix, an amount of alcohol (f) approximately 1/1 molar ratio compared to water and at least one catalyst (h);
v) the solutions obtained in steps (iii) and (iv) are warmed at 40-60 °C, then the solution of step (iii) is slowly added to the solution of step (iv) thus leading to a new solution, called Solution 2.

35. Process according to claims 33-34 wherein Solutions 1 and 2 are mixed together and, after mixing, both a cross-linking reaction of the organic matrix and a sol-gel process of the polysiloxane precursors take place.

36. Process according to claims 33-35 wherein Solutions 1 and 2 are mixed together in order to obtain a final hybrid compound that is subjected to a curing post treatment.

37. Kit of parts to obtain the organic-inorganic hybrid polymer material according to claims 21-22 comprising: a Solution 1 containing: (a) a polymerisable organic compound selected among those producing thermosetting resins; (b) non-hydrolised polysiloxanes precursors **characterised in that** they have a single Si atom in the molecule, linked directly or by means of an O atom, to four C atoms; (c) a coupling agent, which is able to interconnect the organic matrix to the inorganic network; a Solution 2 containing: (d) a hardener component, specifically chosen for the thermosetting resin employed; (e) alkaline aqueous environment; (f) an organic solvent, preferably alcoholic, most preferably ethyl alcohol; (g) at least one metal oxide in its anionic form, such as boron, molybdenum or tungsten; capable to form links with the Si atoms of the organic network via an oxygen atom and to be released in the same form, that is metal oxide in anionic form when exposed to water environments; (h) catalysts; instructions for use.

## Patentansprüche

1. Polymerzusammensetzung, hergestellt durch Vereinigen einer ersten und einer zweiten separat hergestellten Lösung, wobei die erste Lösung die folgenden Komponenten enthält:
(a) eine polymerisierbare organische Verbindung, ausgewählt aus denjenigen, die wärmehärtbare Harze ergeben;
(b) nicht-hydrolysierte Polysiloxan-Vorläufer, **dadurch gekennzeichnet, dass** sie ein einziges Si-Atom in ihrem Molekül haben, das direkt oder mittels eines O-Atoms an 4 C-Atome gebunden ist;
(c) einen Haftvermittler, der die organische Matrix mit dem anorganischen Netzwerk durch kovalente Bindung sowohl mit den organischen als auch den anorganischen Phasen verbinden kann;
wobei die zweite Lösung die folgenden Komponenten enthält:
(d) eine Härterkomponente, die im einzelnen für das verwendete wärmehärtbare System ausgewählt ist;
(e) eine alkalische wässrige Umgebung, vorzugsweise Wasser bei pH ≥ 8;
(f) ein organisches, vorzugsweise alkoholische, Lösungsmittel, am meisten bevorzugt Ethylalkohol;
(g) mindestens ein Metalloxid in seiner anionischen Form, das Verknüpfungen mit den Si-Atomen über ein Sauerstoffatom bilden kann und in derselben Form, d.h. Metalloxid in anionischer Form, freigesetzt werden soll, wenn es Wasserumgebungen ausgesetzt ist;
(h) Katalysatoren.

2. Polymerzusammensetzung gemäss Anspruch 1, die ferner umfasst: Pigmente, Stabilisatoren, Füllstoffe, Rheologiemodifizierungsmittel, Weichmacher, Thixotropiermittel, Brandschutzmittel, Verdünnungsmittel, UV-Stabilisatoren, Antifäulnismittel und fluorreiche organische Verbindungen.

3. Polymerzusammensetzung gemäss Anspruch 1, in der die Komponenten in den folgenden Mengen vorliegen: 20 bis 60 Gew.% organische Komponente (a), 10 bis 40 Gew.% Polysiloxan-Vorläufer (b), 1 bis 20 Gew.% Haftvermittler (c), 5 bis 20 Gew.% Härterkomponente (d), 3 bis 30 Gew.% organisches, vorzugsweise alkoholisches, Lösungsmittel (e), 1 bis 10 Gew.% Wasser (f), mindestens 1 % Metalloxid (g).

4. Polymerzusammensetzung gemäss Anspruch 1, in der das wärmehärtbare Harz ausgewählt ist aus der Gruppe aus aromatischen, cycloaliphatischen und aliphatischen Epoxyharzen, Phenoxyharzen, Alkydharzen, Vinylester-und Epoxy-Vinylester-Harzen.

5. Polymerzusammensetzung gemäss Anspruch 4, in der die aromatischen Epoxyharze diejenigen sind, die sich von Epichlorhydrin und Bisphenol A ableiten, die aliphatischen Epoxyharze diejenigen sind, die sich von hydriertem Cyclohexan-Dimethanol und Diglycidylethern von Epoxyharzen vom hydrierten Bisphenol A-Typ ableiten, die Epoxy-Vinylester-Harze sich von der Reaktion von Bisphenol A mit Epichlorhydrin, terminiert mit einer ungesättigten Säure, ableiten, und die Alkydharze diejenigen sind, die sich von der Reaktion eines organischen Alkohols und einer organischen Säure, aufgelöst und umgesetzt mit ungesättigten Monomeren, ableiten.

6. Polymerzusammensetzung gemäss Anspruch 1, in der die Polysiloxan-Vorläufer Alkoxide und substituierte Alkoxide umfassen, die ein oder mehrere nichthydrolysierbare Gruppen aufweisen.

7. Polymerzusammensetzung gemäss Anspruch 6, in der die Alkoxide Alkoxysilane mit der Formel (R₁)ₘSi(OR₂)ₙ sind, worin R₁ eine aliphatische Kette ist, die gegebenenfalls mit einer reaktiven chemischen Gruppe, wie beispielsweise Amin-, Epoxy-, Mercaptan-, vinyl-oder Alkoxygruppen substituiert ist, R₂ ein Wasserstoffatom oder eine aliphatische Kette ist, m eine ganze Zahl zwischen 0 und 3 ist und m eine ganze Zahl zwischen 1 und 4 ist, wobei n + m = 4.

8. Polymerzusammensetzung gemäss Anspruch 6, in der das Alkoxid Tetraethoxysilan ist.

9. Polymerzusammensetzung gemäss Anspruch 1, in der der Haftvermittler (c) ein Alkoxysilan mit der Formel (R₁)ₘSi(OR₂)ₙ ist, worin m eine ganze Zahl ist und im Bereich zwischen 1 und 3 liegt, n eine ganze Zahl ist, die im Bereich zwischen 1 und 3 liegt, wobei n + m = 4, R₁ eine aliphatische Kette ist, die mit einer chemischen Gruppe, ausgewählt aus der Gruppe von Amin-, Epoxy-, Mercaptan-, Vinyl- oder Alkoxygruppen, die mit den ausgewählten wärmehärtbaren Harzen reagieren kann, substituiert ist, R₂ ein Wasserstoffatom oder eine aliphatische Kette, die vorzugsweise 1 bis 10 Kohlenstoffatome hat, ist.

10. Polymerzusammensetzung gemäss Anspruch 9, in der der Haftvermittler für Epoxyharz ausgewählt ist aus der Gruppe aus γ-Bis-aminopropyltrimethoxysilan, γ-Mercaptopropyltrimethoxysilan, Glycidoxypropyltrimethoxysilan, Phenyltrimethoxysilylpropylamin und γ-Aminopropyltriethoxysilan.

11. Polymerzusammensetzung gemäss Anspruch 9, in der der Haftvermittler für Vinylesterharze ausgewählt ist aus der Gruppe aus Vinyltriethoxysilan, Vinyltrimethoxysilan, Methacrylattrimethoxysilan und Methacrylattriethoxysilan.

12. Polymerzusammensetzung gemäss Anspruch 1, in der die Härterkomponente (d) für Systeme auf Epoxybasis ausgewählt ist aus der Gruppe aus aliphatischen, cycloaliphatischen und aromatischen Aminen und vorzugsweise primären bifunktionellen Aminen, deren Moleküle mindestens zwei -NH₂-Gruppen enthalten, wie 4,4'-Methylen-bis-cyclohexylamin.

13. Polymerzusammensetzung gemäss Anspruch 1, in der die Härterkomponente (d) für Vinylesterharze ausgewählt ist aus der Gruppe aus olefinischen Verbindungen, wie Styrol.

14. Polymerzusammensetzung gemäss Anspruch 1, in der das alkoholische Lösungsmittel (f) Ethanol ist.

15. Polymerzusammensetzung gemäss Anspruch 1, in der die anorganische Metallverbindung in Form eines Metalloxids oder einer anorganischen Säure oder eines entsprechenden Salzes ist.

16. Polymerzusammensetzung gemäss Anspruch 1, in der die Metallverbindung in Form der entsprechenden Säure ist und ausgewählt ist aus der Gruppe aus Molybdänsäure, Borsäure, Wolframsäure und entsprechenden Salzen.

17. Polymerzusammensetzung gemäss Anspruch 1, in der der Katalysator (h) ein Katalysator auf Zinnbasis ist.

18. Polymerzusammensetzung gemäss Anspruch 17, in der der Katalysator Dibutylzinndilaurat ist.

19. Polymerzusammensetzung gemäss Anspruch 17, die ferner Cumolhydroperoxid und Methylethylketonperoxid umfasst.

20. Beschichtungen oder gefertigte Gegenstände, die die Zusammensetzung gemäss Ansprüchen 1 bis 20 enthalten.

21. Organisch-anorganisches Hybridpolymermaterial, **gekennzeichnet durch** ein sich durchdringendes Netzwerk, das gebildet ist aus einer organischen Matrix, die mindestens ein polymerisierbares wärmehärtbares Harz, mindestens ein anorganisches Polysiloxan-Netzwerk, mindestens einen Haftvermittler, der das wärmehärtbare Harz und das anorganische Netzwerk **durch** kovalente Bindung miteinander verknüpfen kann, und mindestens ein Metall, das mindestens eines der Si-Atome des Polysiloxans über ein Sauerstoffatom verknüpfen kann, umfasst, wobei das Material erhalten ist **durch** Zusammenmischen einer Lösung (1) und einer Lösung (2) bei Raumtemperatur, wobei die Lösung (1) (a) eine polymerisierbare organische Verbindung, ausgewählt aus denen, die wärmehärtbare Harze ergeben, (b) nicht-hydrolysierte Polysiloxan-Vorläufer, **gekennzeichnet dadurch, dass** sie ein einziges Si-Atom in ihrem Molekül haben, das direkt oder mittels eines O-Atoms an 4 C-Atome gebunden ist, (c) einen Haftvermittler, der die organische Matrix durch kovalente Bindung mit dem anorganischen Netzwerk verbinden kann, enthält, und die Lösung (2) (d) eine Härterkomponente, die im einzelnen für das verwendete wärmehärtbare Harz ausgewählt ist, (e) alkalische wässrige Umgebung, (f) ein organisches, vorzugsweise alkoholisches, Lösungsmittel, am meisten bevorzugt Ethylalkohol, (g) mindestens ein Metalloxid in seiner anionischen Form, das Verknüpfungen mit den Si-Atomen des organischen Netzwerks über ein Sauerstoffatom bilden kann und in derselben Form freigesetzt werden soll, d.h. Metalloxid in anionischer Form, wenn es Wasserumgebungen ausgesetzt wird, (h) Katalysatoren enthält.

22. Organisch-anorganisches Hybridpolymermaterial gemäss Anspruch 21, **dadurch gekennzeichnet, dass** es nach Eintauchen in Wasser bei etwa 80°C für etwa 48 Stunden näherungsweise 5 bis 10 % der Anfangsmenge des ihm in Form von Metalloxid zugesetzten Metalls freisetzt.

23. Verwendung des organisch-anorganischen Hybridpolymermaterials gemäss Ansprüchen 21 bis 22 als Beschichtung für Oberflächen, die aus Metall, Stahl, Holz, Kunststoff, Asphalt und Stein hergestellt sind.

24. Verwendung des organisch-anorganischen Hybridpolymermaterials gemäss Ansprüchen 21 bis 22 als Beschichtung für den chemischen Schutz.

25. Verwendung des organisch-anorganischen Hybridpolymermaterials gemäss Ansprüchen 21 bis 22 als Beschichtung für Raumtemperatur-Schnellhärtungsanwendungen.

26. Verwendung des organisch-anorganischen Hybridpolymermaterials gemäss Ansprüchen 21 bis 22 als Hochglanzdekorbeschichtung.

27. Verwendung des organisch-anorganischen Hybridpolymermaterials gemäss Ansprüchen 21 bis 22 als Antifäulnisbeschichtung.

28. Verwendung des organisch-anorganischen Hybridpolymermaterials gemäss Ansprüchen 21 bis 22 als Beschichtung, um Graffiti zu verhindern.

29. Verwendung des organisch-anorganischen Hybridpolymermaterials gemäss Ansprüchen 21 bis 22 als Beschichtung zur Verhinderung der Oxidation, des Abbaus und der Verschmutzung.

30. Verwendung des organisch-anorganischen Hybridpolymermaterials gemäss Ansprüchen 21 bis 22 als Dielektrikum.

31. Verwendung des organisch-anorganischen Hybridpolymermaterials gemäss Ansprüchen 21 bis 22 zur Herstellung von Artikeln, wie beispielsweise Faserverbundmaterialien, oder als Klebemittel und Füllstoffe.

32. Verwendung des organisch-anorganischen Hybridpolymermaterials gemäss Ansprüchen 21 bis 22 zur Herstellung von Kunstgegenständen.

33. Verfahren, um das organisch-anorganische Hybridpolymermaterial gemäss Ansprüchen 21 bis 22 zu erhalten, wobei das Verfahren die Schritte umfasst, dass Lösung (1) hergestellt wird durch Zusammenmischen der Komponenten (a) und (c) und dann eine Menge Vorläufer (b) hinzugefügt wird; dass Lösung (2) hergestellt wird durch Zusammenmischen einer ersten Mischung, die eine Menge des Metalloxids in seiner anionischen Form (g) umfasst, das vorher in der alkalischen wässrigen Umgebung (e) bei einer Temperatur, die im Bereich zwischen 40 und 60°C liegt, aufgelöst wurde, und einer zweiten Mischung, die eine Menge Härter (d), eine Menge Lösungsmittel (f), näherungsweise in einem Molverhältnis 1:1 im Vergleich zur Komponente (e), und mindestens einen Katalysator (h) umfasst, wobei die ersten und zweiten Mischungen auf 40 bis 60°C erwärmt werden, und dass die erste Lösung langsam zu der zweiten Lösung hinzugefügt wird und so Lösung (2) erhalten wird,
wobei die Lösung (1) und die Lösung (2) bei der Verwendung zusammengemischt werden.

34. Verfahren, um das organisch-anorganische Hybridpolymermaterial gemäss Ansprüchen 21 bis 22 zu erhalten, wobei das Verfahren die folgenden Schritte umfasst:
(i) zu mindestens einer polymerisierbaren organischen Verbindung (a) wird ein Haftvermittler (c) hinzugefügt;
(ii) die so erhaltene Mischung wird für einen Zeitraum vermischt, der im Bereich zwischen 5 und 60 Minuten liegt, bei einer Temperatur, die im Bereich zwischen 50 und 90°C liegt, und dann wird eine Menge Polysiloxan-Vorläufer (b) hinzugefügt, wobei die so erhaltene Lösung als Lösung (1) bezeichnet wird;
(iii) separat wird eine Menge des Metalls in seiner anionischen Form (g) in alkalischer wässriger Umgebung (e) bei einer Temperatur aufgelöst, die im Bereich zwischen 40 und 60°C liegt;
(iv) separat wird eine Mischung hergestellt durch Zusammenmischen einer Menge Härter (d), die mindestens zur Bildung der organischen Matrix ausreichend ist, einer Menge Alkohol (f), näherungsweise im molaren Verhältnis 1:1 im Vergleich zu Wasser, und mindestens eines Katalysators (h);
(v) die in den Schritten (iii) und (iv) erhaltenen Lösungen werden auf 40 bis 60°C erwärmt, dann wird die Lösung von Schritt (iii) langsam zu der Lösung von Schritt (iv) hinzugefügt, was somit zu einer neuen Lösung führt, die als Lösung (2) bezeichnet wird.

35. Verfahren gemäss Ansprüchen 33 bis 34, bei dem die Lösungen (1) und (2) zusammengemischt werden und nach dem Mischen sowohl eine Vernetzungsreaktion der organischen Matrix als auch ein Sol-Gel-Prozess der Polysiloxan-Vorläufer stattfindet.

36. Verfahren gemäss Ansprüchen 33 bis 35, bei dem die Lösungen (1) und (2) zusammengemischt werden, um eine Hybrid-Endverbindung zu erhalten, die einer Vernetzungsnachbehandlung unterzogen wird.

37. Satz von Teilen, um das organisch-anorganische Hybridpolymermaterial gemäss Ansprüchen 21 bis 22 zu erhalten, der folgendes umfasst: eine Lösung (1), die
(a) eine polymerisierbare organische Verbindung, ausgewählt aus denen, die wärmehärtbare Harze ergeben, (b) nicht-hydrolysierte Polysiloxan-Vorläufer, **dadurch gekennzeichnet, dass** sie ein einziges Si-Atom in ihrem Molekül haben, das direkt oder mittels eines O-Atoms an 4 C-Atome gebunden ist,
(c) einen Haftvermittler, der die organische Matrix mit dem anorganischen Netzwerk verbinden kann, enthält; eine Lösung (2), die (d) eine Härterkomponente, die im einzelnen für das verwendete wärmehärtbare Harz ausgewählt ist, (e) alkalische wässrige Umgebung, (f) ein organisches, vorzugsweise alkoholisches, Lösungsmittel, am meisten bevorzugt Ethylalkohol, (g) mindestens ein Metalloxid in seiner anionischen Form, wie Bor, Molybdän oder Wolfram, das Verknüpfungen mit den Si-Atomen des organischen Netzwerks über ein Sauerstoffatom bilden kann und in derselben Form, d.h. Metalloxid in anionischer Form, freigesetzt werden soll, wenn es Wasserumgebungen ausgesetzt ist, (h) Katalysatoren enthält; eine Gebrauchsanleitung.

## Revendications

1. Composition polymère préparée par la combinaison d'une première et d'une deuxième solutions préparées séparément, ladite première solution comprenant les composants suivants :
(a) un composé organique polymérisable sélectionné parmi ceux produisant les résines thermodurcissables ;
(b) les précurseurs de polysiloxanes non-hydrolysés **caractérisés en ce qu'**ils ont un seul atome Si dans la molécule, lié directement ou au moyen d'un atome O, à quatre atomes C ;
(c) un agent de couplage, qui est apte à interconnecter la matrice organique au réseau inorganique par des liaisons covalentes à la fois avec les phases organique et inorganique;
ladite deuxième solution comprenant les composants suivants:
(d) un composant de durcissement, spécialement sélectionné pour la mise en oeuvre du système thermodurcissable;
(e) un environnement aqueux alcalin, préférablement l'eau à pH≥8 ;
(f) un solvant organique, préférablement alcoolique, le plus préférablement l'éthanol ;
(g) au moins un oxyde métallique sous sa forme anionique, capable de former des liaisons avec les atomes Si par un atome d'oxygène et d'être libéré sous la même forme, c'est-à-dire un oxyde métallique sous la forme anionique lorsqu'il est exposé aux environnements aqueux;
(h) des catalyseurs.

2. Composition polymère selon la revendication 1 comprenant en plus : des pigments, des stabilisants, des charges, des modificateurs rhéologiques, des plastifiants, des agents thixotropiques, des retardateurs de flamme, des diluants, des stabilisants UV, des agents antisalissure et des composés organiques riches en fluor.

3. Composition polymère selon la revendication 1 dans laquelle les composants sont présents dans les quantités suivantes : 20-60% en poids de composé organique (a), 10-40% en poids de précurseurs de polysiloxanes (b), 1-20% en poids d'agent de couplage (c), 5-20% en poids de composant de durcissement (d), 3-30% en poids de solvant organique, préférablement alcoolique (e), 1-10% en poids d'eau (f), au moins 1% d'oxyde métallique (g).

4. Composition polymère selon la revendication 1 dans laquelle la résine thermodurcissable est sélectionnée dans le groupe des résines époxy aromatiques, cycloaliphatiques et aliphatiques, des résine phénoxy, des résines alkydes, des résines d'ester vinylique et des résines époxy d'ester vinylique.

5. Composition polymère selon la revendication 4 dans laquelle les résines époxy aromatiques sont celles dérivées d'épichlorhydrine et de bisphénol-A, les résines époxy aliphatiques sont celles dérivées du cyclohexane diméthanol hydrogéné et des résines époxy du type de diglycidyl ether de bisphénol-A hydrogéné, les résines époxy d'ester vinylique sont dérivées de la réaction de bisphénol-A avec l'épichlorhydrine terminées avec un acide insaturé et les résines alkydes sont celles dérivées de la réaction d'un alcool organique et un acide organique dissous et mis à réagir avec des monomères insaturés.

6. Composition polymère selon la revendication 1 dans laquelle les précurseurs de polysiloxanes comprennent les alkoxydes et les alkoxydes substitués, ayant un ou plusieurs groupes non-hydrolysables.

7. Composition polymère selon la revendication 6 dans laquelle les alkoxydes sont des alkoxysilanes ayant la formule : (R1)ₘSi(OR)ₙ où R1 est une chaîne aliphatique éventuellement substituée par un groupe chimique réactif tel qu'amine, époxy, mercaptan, vinyle ou alkoxy, R2 est un atome d'hydrogène ou une chaîne aliphatique, m est un entier naturel entre 0 et 3 et n est un entier naturel entre 1 et 4, avec n+m=4.

8. Composition polymère selon la revendication 6 dans laquelle l'alkoxyde est le tétraéthoxysilane.

9. Composition polymère selon la revendication 1 dans laquelle l'agent de couplage (c) est une formule d'alkoxysilane ayant la formule (R1)ₘSi(OR)ₙ où m est un entier naturel allant de 1 à 3, n est un entier naturel allant de 1 à 3, avec n+m=4, R1 est une chaîne aliphatique substituée par un groupe chimique sélectionné dans le groupe comprenant amine, époxy, mercaptan, vinyle ou alkoxyl, capable de réagir avec les résines thermodurcissables, R2 est un atome d'hydrogène ou une chaîne aliphatique ayant préférablement 1 à 10 atomes de carbone.

10. Composition polymère selon la revendication 9 dans laquelle l'agent de couplage pour les résines époxy est sélectionné dans le groupe de : γ-bis-aminopropyltrimethoxysilane, γ-mercaptopropyltrimethyoxysilane, glicydoxypropyltrimethoxysilane, phenyl-trimethoxy-silylpropylamine, γ-aminopropyltriethoxysilane.

11. Composition polymère selon la revendication 9 dans laquelle l'agent de couplage pour les résines d'ester vinylique est sélectionné dans le groupe de : vinyltriethoxysilane, vinyltrimethoxysilane, methacrylate trimethoxysilane, methacrylate triethoxysilane.

12. Composition polymère selon la revendication 1 dans laquelle le composant de durcissement (d) pour le système basé sur l'époxy est sélectionné dans le groupe consistant en: les amines aliphatiques, cycloaliphatiques et aromatiques et préférablement les amines primaires difonctionnelles, dont les molécules contiennent au moins deux groupes-NH2 telles que la 4-4'-méthylène bis-cyclohexylamine.

13. Composition polymère selon la revendication 1 dans laquelle le composant de durcissement (d) pour les résines d'ester vinylique est sélectionné dans le groupe des composés oléfiniques, tels que le styrène.

14. Composition polymère selon la revendication 1 dans laquelle le solvant alcoolique (f) est l'éthanol.

15. Composition polymère selon la revendication 1 dans laquelle le composé métallique inorganique est sous la forme d'un oxyde métallique ou d'un acide inorganique ou du sel correspondant.

16. Composition polymère selon la revendication 1 dans laquelle le composé est sous la forme de l'acide correspondant et est sélectionné dans le groupe de: l'acide molybdique, l'acide borique et l'acide tungstique et des sels correspondants.

17. Composition polymère selon la revendication 1 dans laquelle le catalyseur (h) est un catalyseur à base d'étain.

18. Composition polymère selon la revendication 17 dans laquelle le catalyseur est le dilaurate de dibutylétain.

19. Composition polymère selon la revendication 17 comprenant en plus de l'hydroperoxyde de cumène et du peroxyde de méthyl éthyl cétone.

20. Revêtements ou produits manufacturés comprenant la composition selon les revendications 1-20.

21. Matière polymère hybride organique-inorganique **caractérisée par** un réseau interpénétré constitué d'une matrice organique comprenant au moins une résine thermodurcissable polymérisable, au moins un réseau inorganique de polysiloxane, au moins un agent de couplage capable d'interconnecter la résine thermodurcissable et le réseau inorganique par une liaison covalente et au moins un métal capable de lier au moins un des atomes Si du polysiloxane par un atome d'oxygène, ladite matière étant obtenue par le mélange à la température ambiante de la Solution 1 et de la Solution 2, la dite Solution 1 contenant : (a) un composé organique polymérisable sélectionné parmi ceux produisant les résines thermodurcissables ; (b) les précurseurs de polysiloxanes non-hydrolysés **caractérisés en ce qu'**ils ont un seul atome Si dans la molécule, lié directement ou par le moyen d'un atome O, à quatre atomes C ; (c) un agent de couplage, lequel est apte à interconnecter la matrice organique au réseau inorganique par liaison covalente ; et ladite Solution 2 contenant : (d) un composant de durcissement, spécialement sélectionné pour la mise en oeuvre de la résine thermodurcissable ; (e) un environnement aqueux alcalin ; (f) un solvant organique, préférablement alcoolique, le plus préférablement l'éthanol; (g) au moins un oxyde métallique sous sa forme anionique, capable de former les liaisons avec les atomes Si du réseau organique par un atome d'oxygène et d'être libéré sous la même forme, c'est-à-dire un oxyde métallique sous la forme anionique lorsqu'il est exposé aux environnements aqueux ; (h) catalyseurs.

22. Matière de polymère hybride organique-inorganique selon la revendication 21 **caractérisée en ce que,** après immersion dans l'eau à environ 80°C pour environ 48 heures, elle libère environ 5 à 10% de la quantité initiale du métal qui a été ajouté sous la forme d'oxyde métallique.

23. Utilisation d'une matière polymère hybride organique-inorganique selon les revendications 21-22 comme revêtement pour des surfaces constituées de métal, d'acier, de bois, de plastique, de béton et de pierre.

24. Utilisation d'une matière polymère hybride organique-inorganique selon les revendications 21-22 comme revêtement pour la protection chimique.

25. Utilisation d'une matière polymère hybride organique-inorganique selon les revendications 21-22 comme revêtement pour les applications de traitement thermique rapide à la température ambiante.

26. Utilisation d'une matière polymère hybride organique-inorganique selon les revendications 21-22 comme revêtement décoratif brillant.

27. Utilisation d'une matière polymère hybride organique-inorganique selon les revendications 21-22 comme revêtement d'antisalissure.

28. Utilisation d'une matière polymère hybride organique-inorganique selon les revendications 21-22 comme revêtement pour empêcher les graffitis.

29. Utilisation d'une matière polymère hybride organique-inorganique selon les revendications 21-22 comme revêtement pour empêcher l'oxydation, la dégradation et la pollution.

30. Utilisation d'une matière polymère hybride organique-inorganique selon les revendications 21-22 comme diélectrique.

31. Utilisation d'une matière polymère hybride organique-inorganique selon les revendications 21-22 pour la production des produits tels que les composites fibreux ou des adhésifs et des charges.

32. Utilisation d'une matière polymère hybride organique-inorganique selon les revendications 21-22 pour la production de produits artistiques.

33. Procédé d'obtention de la matière polymère hybride organique-inorganique selon les revendications 21-22, ledit procédé comprenant les étapes de préparation de la Solution 1 par mélange ensemble des composants (a) et (c) et ensuite une quantité de précurseur est ajoutée ; préparation de la Solution 2 par mélange ensemble un premier mélange comprenant une quantité d'oxyde métallique sous sa forme anionique (g) dissous préalablement dans un environnement aqueux alcalin (e) à une température comprise de 40 à 60 °C, et un second mélange comprenant une quantité d'agent de durcissement (d), une quantité de solvant (f) ayant une proportion molaire environ 1/1 par rapport au composant (e) et au moins un catalyseur (h) ; le premier et le seconde mélange étant chauffés à 40-60°C et ladite première solution étant ajoutée lentement à la seconde solution, de manière à obtenir la Solution 2 ; ladite Solution 1 et la Solution 2 étant mélangées ensemble lors de l'utilisation.

34. Procédé d'obtention de la matière polymère hybride organique-inorganique selon les revendications 21-22, ledit procédé comprenant les étapes suivantes :
i) à au moins un composé organique polymérisable (a) un agent de couplage est ajouté ;
ii) le mélange ainsi obtenu est mélangé pendant une période de temps entre 5 à 60 minutes à une température entre 50 et 90°C, et ensuite une quantité de précurseur de polysiloxane (b) est ajoutée ; la solution ainsi obtenue étant appelée Solution 1 ;
iii) séparément, une quantité de métal sous sa forme anionique (g) est dissoute dans un environnement aqueux alcalin (e) à une température comprise entre 40 à 60 °C ;
iv) séparément, un mélange est préparé en mélangeant ensemble une quantité d'agent de durcissement (d) au moins suffisante pour la formation d'une matrice organique, une quantité d'alcool (f) ayant une proportion molaire 1/1 par rapport à l'eau et au moins un catalyseur (h) ;
v) les solutions obtenues dans les étapes (iii) et (iv) sont chauffées à 40-60°C, ensuite la solution de l'étape (iii) est ajoutée lentement à la solution de l'étape (iv) en donnant une nouvelle solution, appelée Solution 2.

35. Procédé selon les revendications 33-34 dans lequel les Solutions 1 et 2 sont mélangées ensemble et, après le mélange, une réaction de réticulation de la matrice organique et un procédé sol-gel des précurseurs de polysiloxane ont lieu.

36. Procédé selon les revendications 33-35 dans lequel les Solutions 1 et 2 sont mélangées ensemble afin d'obtenir un composé hybride final lequel est soumis à un post-traitement thermique.

37. Nécessaire pour obtenir la matière de polymère hybride organique-inorganique selon les revendications 21-22 comprenant : une Solution 1 contenant: (a) un composé organique polymérisable sélectionné parmi ceux produisant les résines thermodurcissable ; (b) les précurseur de polysiloxanes non-hydrolysés **caractérisés en ce que** ils ont un seule atome Si dans la molécule, lié directement ou par le moyen d'un atome O, à quatre atomes C ; (c) un agent de couplage, lequel est apte à interconnecter la matrice organique au réseau inorganique ; une Solution 2 contenant : (d) un composant de durcissement, spécifiquement choisi pour la mise en oeuvre des résines thermodurcissables; (e) un environnement aqueux alcalin; (f) un solvant organique, préférablement alcoolique, plus préférablement alcool éthylique; (g) au moins un oxyde métallique sous sa forme anionique, tel que le bore, le molybdène ou le tungstène; capable de former les liaisons avec les atomes Si d'un réseau organique par un oxygène atome et d'être libéré sous la même forme, c'est-à-dire un oxyde métallique sous la forme anionique lorsqu'il est exposé aux environnements aqueux ; (h) les catalyseurs ; les manuels pour l'utilisation.
